# EUROPEAN PATENT APPLICATION

(11) **EP 4 744 819 A1**
(43) Date of publication of application: **20.05.2026**
(21) Application number: 24876015.9
(22) Date of filing: 16.05.2024
(51) Int. Cl.: B23K 37/04

(54) **PRESSING PLATE ASSEMBLY, WELDING SYSTEM, AND WELDING METHOD**

(30) Priority: 12.10.2023 CN 202311322361
(71) Applicant: Contemporary Amperex Technology Co., Limited, Ningde, Fujian 352100 (CN)
(72) Inventor: WU, Kai, Ningde, Fujian 352100 (CN); LI, Jie, Ningde, Fujian 352100 (CN); YANG, Mukai, Ningde, Fujian 352100 (CN); PAN, Wensheng, Ningde, Fujian 352100 (CN); FAN, Xiang, Ningde, Fujian 352100 (CN); ZHANG, Yifei, Ningde, Fujian 352100 (CN)
(74) Representative: Ziebig Hengelhaupt Intellectual Property Attorneys Patentanwaltskanzlei PartGmbB
(86) International application number: PCT/CN2024/093722
(87) International publication number: WO 2025/077188

(57) **Abstract**

The present application discloses a pressing plate assembly, a welding system, and a welding method. The pressing plate assembly comprises a pressing plate and a rotating pressure arm, wherein the pressing plate is configured to cover an end surface of a to-be-welded member; and the rotating pressure arm is connected to the pressing plate, is configured to press the to-be-welded member through the pressing plate, extends in a direction away from the pressing plate, and is capable of rotating relative to the to-be-welded member, to change a position of an edge of the to-be-welded member shielded by the rotating pressure arm and/or the pressing plate. Therefore, the pressing plate covers the end surface of the to-be-welded member, the rotating pressure arm is connected to the pressing plate, and the to-be-welded member may be pressed through the rotating pressure arm and the pressing plate, so that the to-be-welded member tightly contacts with other components, which is convenient for welding the to-be-welded member and improves the welding stability. Moreover, the position of the edge of the to-be-welded member shielded by the rotating pressure arm and/or the pressing plate may also be changed through the rotating pressure arm, which is convenient for welding along the edge of the to-be-welded member while pressing the to-be-welded member, thereby improving the reliability of the welding and the convenience of the welding process.

## Description

The present application claims priority to Chinese patent application with application number 2023113223613 filed on 12 October 2023 and titled "PRESSING PLATE ASSEMBLY, WELDING SYSTEM, AND WELDING METHOD", which is incorporated into the present application by reference in its entirety.

### TECHNICAL FIELD

The present application relates to the technical field of welding, and particularly relates to a pressing plate assembly, a welding system, and a welding method.

### BACKGROUND

Welding is a process of welding two components together. Common welding manners include, e.g., gas welding, fusion welding, laser welding, and ultrasonic welding.

When two components need to be welded, it is necessary to press the two components, so that the two components contact with each other, and then are welded to fix the two components together. However, how to smoothly weld the components while pressing them has become a technical problem to be solved urgently.

### SUMMARY OF THE INVENTION

The present application is mainly intended to provide a pressing plate assembly, a welding system, and a welding method, so as to solve the above technical problems existing in the prior art.

In order to solve the technical problems existing in the prior art, the present application provides a pressing plate assembly, comprising a pressing plate and a rotating pressure arm, wherein the pressing plate assembly comprises a pressing plate and a rotating pressure arm, wherein the pressing plate is configured to cover an end surface of a to-be-welded member; and the rotating pressure arm is connected to the pressing plate, is configured to press the to-be-welded member through the pressing plate, extends in a direction away from the pressing plate, and can rotate relative to the to-be-welded member, to change a position of an edge of the to-be-welded member shielded by the rotating pressure arm and/or the pressing plate. Therefore, the pressing plate covers the end surface of the to-be-welded member, the rotating pressure arm is connected to the pressing plate, and the to-be-welded member may be pressed through the rotating pressure arm and the pressing plate, so that the to-be-welded member tightly contacts with other components, which is convenient for welding the to-be-welded member and improves the welding stability. Moreover, the position of the edge of the to-be-welded member shielded by the rotating pressure arm and/or the pressing plate may also be changed through the rotating pressure arm, which is convenient for welding along the edge of the to-be-welded member while pressing the to-be-welded member, thereby improving the reliability of the welding and the convenience of the welding process.

In some embodiments, the pressing plate is configured to cover a non-edge region of the end surface of the to-be-welded member. Therefore, the pressing plate covers the non-edge region of the end surface of the to-be-welded member, thereby alleviating the interference of the pressing plate with a welding operation along the edge of the to-be-welded member, improving the welding efficiency of the welding, and alleviating the risk that weld beads splash onto the end surface of the to-be-welded member during the welding by shielding the end surface of the to-be-welded member through the pressing plate.

In some embodiments, the rotating pressure arm can rotate relative to the pressing plate to change the position of the edge of the to-be-welded member shielded by the rotating pressure arm. Therefore, since the pressing plate covers the non-edge region of the end surface of the to-be-welded member, it is only necessary to rotate the rotating pressure arm relative to the pressing plate, to change the position of the shielded edge of the to-be-welded member, improve the welding efficiency of the welding, and further facilitate welding along the edge of the to-be-welded member while pressing the to-be-welded member, thereby improving the reliability of the welding and the convenience of the welding process.

In some embodiments, the pressing plate has a first end surface and a second end surface arranged opposite to each other, the first end surface covers the end surface of the to-be-welded member, the pressing plate assembly further comprises a connecting post connected to the pressing plate, and the connecting post protrudes from the second end surface and is connected to the rotating pressure arm. Therefore, the rotating pressure arm is connected to the pressing plate through the connecting post, thereby contributing to relative rotation of the rotating pressure arm to the to-be-welded member through the connecting post, and the connecting post protrudes from the second end surface. When the rotating pressure arm is connected to the connecting post, the risk caused by the rotating pressure arm when the pressing plate presses the to-be-welded member can also be alleviated.

In some embodiments, the connecting post is fixedly connected to the pressing plate, one end of the rotating pressure arm is provided with a sleeve hole, the rotating pressure arm is sleeved on an outer periphery of the connecting post through the sleeve hole, and the rotating pressure arm can rotate relative to the connecting post. Therefore, the outer periphery of the connecting post is sleeved through the sleeve hole of the rotating pressure arm, so that the rotating pressure arm is connected to the connecting post, which can simplify the connection form of the rotating pressure arm and the connecting post, facilitate the disassembly and maintenance of the pressing plate assembly, can rotate the rotating pressure arm relative to the connecting post through the sleeve hole, and can change the position of the edge of the to-be-welded member shielded by the rotating pressure arm in a simpler way, thereby improving the reliability of the welding and the convenience of the welding process.

In some embodiments, the connecting post comprises a sleeve portion and a clamp-stopping portion that are coaxially arranged, the rotating pressure arm is sleeved on an outer periphery of the sleeve portion through the sleeve hole, the pressing plate assembly further comprises a locking member, the locking member is connected to the rotating pressure arm, and the locking member is configured to match the clamp-stopping portion to keep the connecting post and the rotating pressure arm relatively fixed. Therefore, the locking member may be fitted with the clamp-stopping portion to keep the rotating pressure arm and the connecting post relatively fixed, thereby further keeping the rotating pressure arm, the connecting post, and the pressing plate relatively fixed, and alleviating the risk of affecting the welding because the rotating pressure arm rotates by mistake when rotation is not required.

In some embodiments, an outer wall surface of the clamp-stopping portion comprises at least one pair of first clamp-stopping surfaces arranged along a radial direction of the clamp-stopping portion, the locking member is provided with a clamp-stopping groove, an inner wall surface of the clamp-stopping groove comprises at least one pair of second clamp-stopping surfaces arranged along the radial direction of the clamp-stopping portion, the clamp-stopping portion is located in the clamp-stopping groove, and one of the first clamp-stopping surfaces abuts against a corresponding second clamp-stopping surface among the second clamp-stopping surfaces, to keep the connecting post and the rotating pressure arm relatively fixed. Therefore, the at least one pair of first clamp-stopping surfaces arranged on the clamp-stopping portion abuts against the at least one pair of second clamp-stopping surfaces on an inner wall of the clamp-stopping groove, so that the locking member is fitted with the clamp-stopping portion to keep the rotating pressure arm and the connecting post relatively fixed, thereby alleviating the risk of affecting the welding because the rotating pressure arm rotates by mistake when rotation is not required, achieving simple overall structure, contributing to processing and manufacturing, and reducing the production costs.

In some embodiments, a groove mouth of the clamp-stopping groove faces the clamp-stopping portion, and the locking member enables the clamp-stopping portion to be located in the clamp-stopping groove through the groove mouth of the clamp-stopping groove; or the locking member enables the clamp-stopping portion to exit from the clamp-stopping groove through the groove mouth of the clamp-stopping groove. Therefore, the groove mouth of the clamp-stopping groove is arranged facing the clamp-stopping portion, so that the groove mouth of the clamp-stopping groove enables the clamp-stopping portion to be located in the clamp-stopping groove or enables the clamp-stopping portion to exit from the clamp-stopping groove, thereby simplifying the way of keeping the rotating pressure arm and the connecting post relatively fixed through the locking member, simplifying the way of relieving the relative fixation between the rotating pressure arm and the connecting post, improving the efficiency of fixing or relieving the fixation, and further improving the processing efficiency of welding.

In some embodiments, the outer wall surface of the clamp-stopping portion comprises a first abutting surface, one side surface of the locking member facing the clamp-stopping portion comprises a second abutting surface, and the locking member abuts against the second abutting surface through the first abutting surface, to keep the connecting post and the rotating pressure arm relatively fixed. Therefore, the first abutting surface arranged on the clamp-stopping portion abuts against the second abutting surface arranged on the locking member, so that the locking member is fitted with the clamp-stopping portion to keep the rotating pressure arm and the connecting post relatively fixed, thereby alleviating the risk of affecting the welding because the rotating pressure arm rotates by mistake when rotation is not required, achieving simple overall structure, contributing to processing and manufacturing, and reducing the production costs.

In some embodiments, one of the rotating pressure arm and the locking member is provided with a sliding groove extending in a direction away from the connecting post, the other one of the rotating pressure arm and the locking member is provided with a sliding portion slidably fitted with the sliding groove, and the sliding portion is configured to slide in the sliding groove, to make the locking member be close to or away from the clamp-stopping portion. Therefore, the sliding portion slides in the sliding groove, to make the locking member be close to or away from the clamp-stopping portion, thereby simplifying the way of keeping the rotating pressure arm and the connecting post relatively fixed through the locking member, simplifying the way of relieving the relative fixation between the rotating pressure arm and the connecting post, improving the efficiency of fixing or relieving the fixation, and further improving the processing efficiency of welding.

In some embodiments, the sleeve portion is closer to the pressing plate than the clamp-stopping portion. Therefore, the sleeve portion is closer to the pressing plate than the clamp-stopping portion, thereby making it easier for the rotating pressure arm to press the to-be-welded member through the pressing plate, improving the pressing effect, and the clamp-stopping portion is away from the pressing plate, thereby further facilitating fitting of the locking member with the clamp-stopping portion to fix the rotating pressure arm.

In some embodiments, the pressing plate assembly further comprises a top member fixed to one end of the clamp-stopping portion away from the pressing plate and having a larger radial size than the clamp-stopping portion. Therefore, the top member has the larger radial size than the clamp-stopping portion. When the locking member is fitted with the clamp-stopping portion to fix the rotating pressure arm, the top member can limit the locking member and the rotating pressure arm, thereby alleviating the risk of detaching the rotating pressure arm from the pressing plate.

In some embodiments, the pressing plate assembly further comprises a bottom member, the connecting post is connected to the pressing plate through the bottom member, and the bottom member has a larger radial size than the connecting post. Therefore, the bottom member has the larger radial size than the connecting post, and the connecting post is connected to the pressing plate through the bottom member, so that the bottom member can be used to space the rotating pressure arm from the pressing plate, thereby alleviating the risk of damaging the rotating pressure arm and the pressing plate by mutual friction between the rotating pressure arm and the pressing plate during the rotation.

In some embodiments, the pressing plate assembly further comprises a top member and an elastic member, the top member is fixed to one end of the connecting post away from the pressing plate, the top member has a larger radial size than the connecting post, the rotating pressure arm is located between the elastic member and the top member, and the elastic member is elastically supported between the rotating pressure arm and the pressing plate. Therefore, the rotating pressure arm is elastically supported between the top member and the pressing plate through the elastic member, thereby alleviating the risk of separating the rotating pressure arm from the pressing plate, spacing the rotating pressure arm from the pressing plate through the elastic member, alleviating the risk of damaging the rotating pressure arm and the pressing plate by mutual friction between the rotating pressure arm and the pressing plate during the rotation, and pressing the to-be-welded member by the rotating pressure arm through the elastic member and the pressing plate, improving the pressing effect, and further improving the processing efficiency of welding.

In some embodiments, the elastic member is sleeved on a peripheral side of the connecting post. Therefore, the elastic member is sleeved on the peripheral side of the connecting post, thereby improving the stability of elastically supporting the rotating pressure arm by the elastic member, and alleviating the risk of detaching the elastic member from the connecting post.

In some embodiments, one of the top member and the rotating pressure arm is provided with a fixing groove, the other one of the top member and the rotating pressure arm is provided with a fixing portion corresponding to the fixing groove, and the fixing portion is inserted into the fixing groove, to keep the connecting post and the rotating pressure arm relatively fixed. Therefore, the fixing groove and the fixing portion are used to keep the connecting post and the rotating pressure arm relatively fixed, thereby further keeping the rotating pressure arm, the connecting post, and the pressing plate relatively fixed, and alleviating the risk of affecting the welding because the rotating pressure arm rotates by mistake when rotation is not required.

In some embodiments, the pressing plate assembly further comprises a bottom member having a larger radial size than the connecting post, the connecting post is connected to the pressing plate through the bottom member, and the elastic member is elastically supported between the rotating pressure arm and the bottom member. Therefore, the bottom member has the larger radial size than the connecting post, the connecting post is connected to the pressing plate through the bottom member, thereby improving the stability of the connection between the connecting post and the pressing plate, and the elastic member is elastically supported between the rotating pressure arm and the bottom member, thereby further improving the stability of elastically supporting the rotating pressure arm by the elastic member.

In order to solve the technical problems existing in the prior art, the present application further provides a welding system, comprising a welding apparatus and the above pressing plate assembly, the pressing plate assembly is configured to press a to-be-welded member, and the welding apparatus is configured to weld the to-be-welded member along an edge of the to-be-welded member.

In order to solve the technical problems existing in the prior art, the present application further provides a welding method, wherein the welding method is applied to the above welding system, and the welding method comprises: pressing, by the rotating pressure arm, an end surface of the to-be-welded member through the pressing plate; welding, by the welding apparatus, the to-be-welded member along an edge of the to-be-welded member; and rotating the rotating pressure arm relative to the to-be-welded member during the welding of the to-be-welded member by the welding apparatus, to change a position of the edge of the to-be-welded member shielded by the rotating pressure arm and/or the pressing plate. Therefore, the to-be-welded member is pressed through the rotating pressure arm and the pressing plate, so that the to-be-welded member tightly contacts with other components, which is convenient for welding the to-be-welded member and improving the welding stability. Moreover, the position of the edge of the to-be-welded member shielded by the rotating pressure arm and/or the pressing plate may also be changed through the rotating pressure arm during the welding, which is convenient for welding along the edge of the to-be-welded member while pressing the to-be-welded member, thereby improving the reliability of the welding and the convenience of the welding process.

In some embodiments, the rotating the rotating pressure arm relative to the pressing plate comprises: rotating the rotating pressure arm along a welding direction of the welding along the edge of the to-be-welded member by the welding apparatus. Therefore, the rotating pressure arm rotates along the welding direction, thereby not only changing the position of the edge of the to-be-welded member shielded by the rotating pressure arm, but also enabling the welding apparatus to uninterruptedly weld along the edge of the to-be-welded member, improving the welding efficiency, and further alleviating the risk of welding errors caused by welding interruptions.

In some embodiments, the rotating the rotating pressure arm relative to the pressing plate comprises: if it is detected that the welding apparatus welds from a first point position to a second point position; wherein the first point position is closer to the rotating pressure arm than the second point position in the welding direction of the welding along the edge of the to-be-welded member by the welding apparatus; rotating the rotating pressure arm along the welding direction from a first position to a second position; wherein the first position comprises a position where the rotating pressure arm is not located between the first point position and the second point position in the welding direction, and the second position comprises a position where the rotating pressure arm shields an area between the first point position and the second point position in the welding direction. Therefore, after the welding apparatus welds from the first point position to the second point position, the rotating pressure arm rotates from the first position to the second position to change the position shielded by the rotating pressure arm from the first position that has not been welded to the second position that has been welded, thereby continuously pressing the to-be-welded member through the pressing plate without affecting the welding, and alleviating the risk of welding errors caused by welding interruptions while improving the welding efficiency.

In some embodiments, after the rotating the rotating pressure arm along the welding direction from the first position to the second position, the welding method further comprises: rotating, if it is detected that the welding apparatus completes a welding operation, the rotating pressure arm from the second position to the first position. Therefore, after the completion of the welding operation is detected, the rotating pressure arm is rotated back to the original first position, thereby facilitating the restoration of the entire processing to the original position, and facilitating subsequent automated pressing and welding.

In some embodiments, the welding, by the welding apparatus, the to-be-welded member along the edge of the to-be-welded member comprises: welding, by the welding apparatus, along the edge of the to-be-welded member to form an end-to-end closed welding track; and welding, by the welding apparatus, to a third point position along end-to-end closure to form a closing track; wherein the third point position is on or outside the welding track. Therefore, after the end-to-end closed welding track is achieved, the welding is continued to the third point position, so that the entire welding track is more complete and the welded product has higher stability.

### DESCRIPTION OF DRAWINGS

In order to more clearly describe technical solutions of embodiments of the present application or the prior art, drawings to be used in the description of the embodiments will be briefly introduced below. Apparently, the drawings described below are merely some embodiments of the present application. For those of ordinary skills in the art, other drawings may also be obtained based on these drawings without creative work.
FIG. 1 is a schematic structural diagram of a battery cell according to one or more embodiments;
FIG. 2 is a schematic structural diagram of a pressing plate assembly pressing a terminal post cover plate according to one or more embodiments;
FIG. 3 is a schematic structural diagram of a pressing plate assembly pressing a to-be-welded member according to one or more embodiments;
FIG. 4 is a schematic diagram of a first state of a first structure of a pressing plate assembly according to one or more embodiments;
FIG. 5 is a schematic diagram of a second state of a first structure of a pressing plate assembly according to one or more embodiments;
FIG. 6 is a schematic disassembly diagram of the pressing plate assembly shown in FIG. 4;
FIG. 7 is a schematic diagram of a first state of a second structure of a pressing plate assembly according to one or more embodiments;
FIG. 8 is a schematic diagram of a second state of a second structure of a pressing plate assembly according to one or more embodiments;
FIG. 9 is a schematic diagram of a first state of a third structure of a pressing plate assembly according to one or more embodiments;
FIG. 10 is a schematic diagram of a second state of a third structure of a pressing plate assembly according to one or more embodiments;
FIG. 11 is a schematic structural block diagram of a welding system according to one or more embodiments;
FIG. 12 is a schematic flowchart of a welding method according to one or more embodiments;
FIG. 13 is a schematic structural diagram of a pressing plate assembly pressing a to-be-welded member at a first position according to one or more embodiments; and
FIG. 14 is a schematic structural diagram of a pressing plate assembly pressing a to-be-welded member at a second position according to one or more embodiments.

Reference numerals: Battery cell 1; Terminal post cover plate 2; Terminal post body 3; Shell 4; To-be-welded member 5;
Pressing plate assembly 10; Pressing plate 100; First end surface 110; Second end surface 120; Rotating pressure arm 200; Sleeve hole 210; Sliding groove 220; Fixing portion 230; Connecting post 300; Sleeve portion 310; Clamp-stopping portion 320; First clamp-stopping surface 321; First abutting surface 322; Bottom member 400; Top member 500; Fixing groove 510; Locking member 600; Clamp-stopping groove 610; Second clamp-stopping surface 611; Groove mouth 612; Sliding portion 620; Second abutting surface 630; Elastic member 700;
Welding system 20; Welding apparatus 30; First point position A1; Second point position A2; Third point position A3; Welding direction X.

### DETAILED DESCRIPTION

Embodiments of the technical solutions of the present application will be described in detail below with reference to the drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of' is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiments of the present application, the term "a plurality of" refers to more than two (including two), and similarly, "a plurality of groups" refers to more than two groups (including two groups); and "a plurality of sheets" refers to more than two sheets (including two sheets).

In the description of the embodiments of the present application, the orientation or positional relationships indicated by the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or positional relationships shown in the accompanying drawings, and are only for convenience of description of the present application and simplification of the description, rather than indicating or implying that the indicated apparatus or element must have a specific orientation, be constructed and operate in a specific orientation, and therefore, cannot be understood as a limitation to the present application.

In the description of the embodiments of the present application, unless otherwise specified and limited, the technical terms "mounting", "connection", "connection", and "fixation" should be understood in a broad sense, for example, they can be fixed connection, detachable connection, or integration; or they can be mechanical connection or electrical connection; or they can be direct connection, indirect connection through an intermediate medium, or communication of the interiors of two elements or the relationship of interaction between two elements. For those of ordinary skills in the art, the specific meanings of the above terms in the embodiments of the present application can be understood based on specific situations.

At present, from the perspective of the development of the market situation, batteries are increasingly widely applied. Batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the batteries, the market demand is also constantly expanding.

The battery may be used in an electrical apparatus, so that the electrical apparatus can implement corresponding functions through electrical energy provided by the battery. For example, the electrical apparatus may include, but is not limited to, a mobile phone, a tablet, a laptop, an electric toy, an electric tool, a battery vehicle, an electric vehicle, a ship, a spacecraft, and the like. The electric toy may include a stationary or mobile electric toy, such as a game machine, an electric car toy, an electric ship toy, or an electric airplane toy, and the spacecraft may include an airplane, a rocket, an aerospace plane, a spaceship, and the like.

The electrical apparatus may be a vehicle, and the vehicle comprises a battery. The vehicle may be a fuel vehicle, a gas vehicle, or a new-energy vehicle. The new-energy vehicle may be, e.g., an all-electric vehicle, a hybrid electric vehicle, or an extended range electric vehicle. A battery is provided inside the vehicle. The battery may be arranged at the bottom or head or tail of the vehicle. The battery may be used to power the vehicle. For example, the battery may be used as an operating power source of the vehicle. The vehicle may further include a controller and a motor. The controller is used to control the battery to power the motor, for example, for meeting operating power demands when the vehicle is starting, navigating, and traveling. In some embodiments of the present application, the battery not only can serve as an operating power source of the vehicle, but also can serve as a driving power source of the vehicle, to provide driving power for the vehicle in place of or partially in place of fuel or natural gas.

The shape of the battery may include, but is not limited to, a square, cylinder, or any other shape.

In some embodiments, the battery may comprise a box and a plurality of battery cells accommodated in the box. The box is configured to provide an accommodating space for the battery cells, and there may be series connection, or parallel connection, or parallel-series connection among the plurality of battery cells. The parallel-series connection means that there is both series connection and parallel connection among the plurality of battery cells. The plurality of battery cells may be directly connected together by series connection or parallel connection or parallel-series connection, and then an entirety composed of the plurality of battery cells is accommodated in the box. Of course, the battery may also be formed by first connecting the plurality of battery cells by series connection or parallel connection or parallel-series connection to form a battery module, then connecting a plurality of battery modules by series connection or parallel connection or parallel-series connection to form an entirety, and accommodating the entirety in the box.

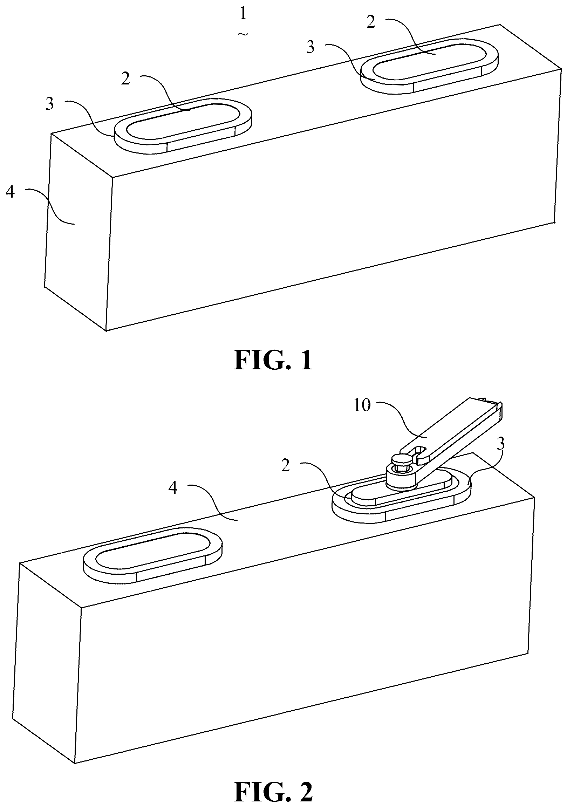

Referring to FIG. 1, FIG. 1 is a schematic structural diagram of a battery cell according to one or more embodiments.

The battery cell 1 refers to a smallest unit constituting a battery, and the battery cell 1 may comprise a shell 4, an electrode assembly, and other functional components. The shell 4 may form an internal environment for accommodating an electrode assembly, and the electrode assembly is located in an internal environment of the shell 4. The electrode assembly is a component in the battery cell 1 where an electrochemical reaction occurs, and a case may comprise one or more electrode assemblies. The electrode assembly is mainly formed by winding or stacking a positive electrode plate and a negative electrode plate, and a spacer is generally provided between the positive electrode plate and the negative electrode plate. Parts of the positive electrode plate and the negative electrode plate having an active material constitute a main body part of the electrode assembly, and parts of the positive electrode plate and the negative electrode plate having no active material each form a tab. The positive tab and the negative tab may be located at one end of the main body part together or located at each end of the main body part respectively. During charging and discharging of the battery, a positive electrode active material and a negative electrode active material react with an electrolyte, and the tab is connected to an electrode terminal post to form a current circuit.

In order to improve the product performance of the battery cell 1, the present application provides a novel battery cell 1, the novel battery cell 1 comprises an electrode terminal post, and the electrode terminal post is hollow. Specifically, the electrode terminal post may comprise a terminal post body 3 and a terminal post cover plate 2, and the terminal post body 3 is annular and protrudes from an end wall of the shell 4. A portion of the shell 4 surrounding the terminal post body 3 may be recessed inward to form a hollow groove, and a bottom wall of the hollow groove has an opening for the tab of the electrode assembly to run through the hollow groove. A portion of the tab of the electrode assembly located in the hollow groove contacts with and is electrically connected to the terminal post body 3. The terminal post cover plate 2 may cover a groove mouth of the hollow groove to seal the hollow groove. Specifically, an annular boss may be provided on a side wall of the hollow groove, and the terminal post cover plate 2 overlaps the annular boss, so that the terminal post cover plate 2 covers the groove mouth of the hollow groove. Further, one side surface of the terminal post cover plate 2 away from the bottom wall of the hollow groove may be in a same plane as one side surface of the terminal post body 3 away from the bottom wall of the hollow groove, so as to facilitate welding between an outer edge of the terminal post cover plate 2 and an inner edge of the terminal post body 3, so that the terminal post cover plate 2 is fixedly connected to the terminal post body 3.

Referring to FIG. 2, FIG. 2 is a schematic structural diagram of a pressing plate assembly pressing a terminal post cover plate according to one or more embodiments.

When the terminal post cover plate 2 and the terminal post body 3 need to be welded, the pressing plate assembly 10 may press the terminal post cover plate 2, so that the terminal post cover plate 2 contacts with the terminal post body 3, and then the terminal post cover plate 2 and the terminal post body 3 are welded to fix the terminal post cover plate 2 and the terminal post body 3 together.

As an example, when the terminal post cover plate 2 and the terminal post body 3 need to be welded, the terminal post cover plate 2 first covers the groove mouth of the hollow groove, then the pressing plate assembly 10 is placed on an end surface of the terminal post cover plate 2, a downward pressure may be applied to the pressing plate assembly 10 through other tooling devices or manually, so that the terminal post cover plate 2 tightly contacts with the terminal post body 3, and then welding is performed along an upper edge where the terminal post cover plate 2 contacts with the terminal post body 3, so that the terminal post cover plate 2 and the terminal post body 3 are fixedly connected.

Specifically, the welding process may be once through, for example, during the welding, the position of the terminal post cover plate 2 shielded by the welding assembly may be changed to complete the welding operation of the terminal post cover plate 2 and the terminal post body 3 without interrupting the welding operation. There may be two electrode terminal posts on a battery cell 1, and the terminal post cover plates 2 and the terminal post bodies 3 of the two electrode terminal posts may be fixed by welding. During an actual operation, one of the terminal post cover plates 2 of one of the electrode terminal posts may be first pressed through a pressing plate assembly 10, and after the welding operation of the terminal post cover plate 2 and the terminal post body 3 of the one electrode terminal post is completed, the welding operation of the terminal post cover plate 2 and the terminal post body 3 of the other one electrode terminal post may be carried out. Or, the terminal post cover plates 2 of the two electrode terminal posts may be simultaneously pressed through two pressing plate assemblies 10, and then welding operations are performed on the terminal post cover plates 2 and the terminal post bodies 3 of the two electrode terminal posts simultaneously.

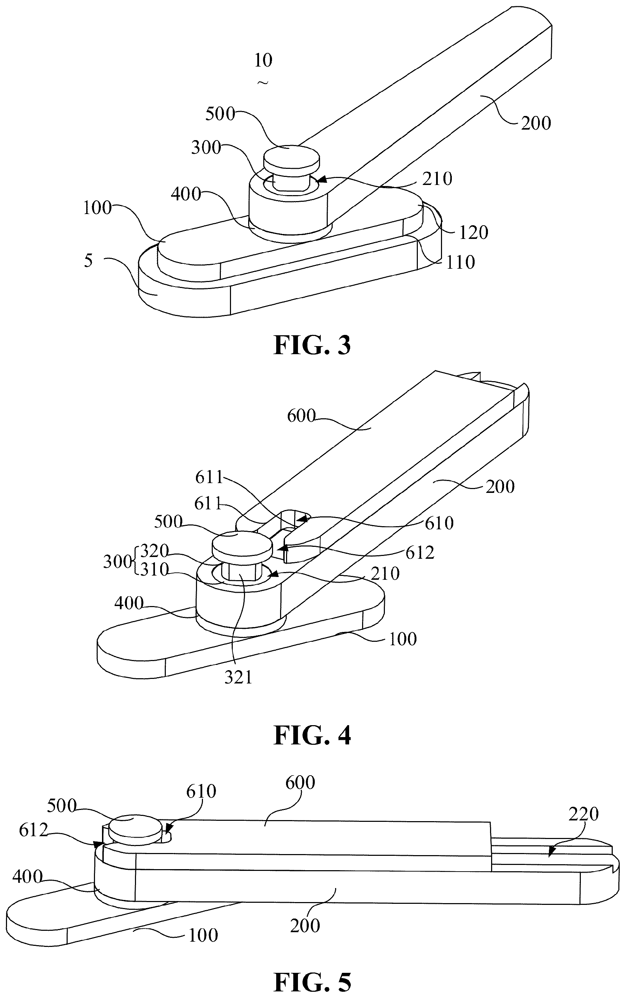

In order to relieve the pressing plate assembly 10 from shielding a to-be-welded position while pressing a to-be-welded member 5, the present application provides a pressing plate assembly, as shown in FIG. 3. FIG. 3 is a schematic structural diagram of a pressing plate assembly pressing a to-be-welded member according to one or more embodiments.

The pressing plate assembly 10 comprises a pressing plate 100 and a rotating pressure arm 200, and the pressing plate 100 is configured to cover an end surface of the to-be-welded member 5. The to-be-welded member 5 may be the above terminal post cover plate 2. Of course, in other application scenarios, the to-be-welded member 5 may also be other to-be-welded components. The pressing plate 100 may be platy, and the pressing plate 100 may be any shape, for example, an end surface of the pressing plate 100 may be, e.g., round, elliptical, runway-shaped, or polygonal. Specifically, the end surface of the pressing plate 100 may have a similar shape to the end surface on one side of the to-be-welded member 5 pressed by the pressing plate 100. As an example, when the pressed end surface of the to-be-welded member 5 is runway-shaped, the end surface of the pressing plate 100 used to press the to-be-welded member 5 may be runway-shaped. For another example, when the pressed end surface of the to-be-welded member 5 is round, the end surface of the pressing plate 100 used to press the to-be-welded member 5 may be round.

The rotating pressure arm 200 is connected to the pressing plate 100. The rotating pressure arm 200 is configured to press the to-be-welded member 5 through the pressing plate 100. The rotating pressure arm 200 extends in a direction away from the pressing plate 100, and can rotate relative to the to-be-welded member 5, to change a position of an edge of the to-be-welded member 5 shielded by the rotating pressure arm 200 and/or the pressing plate 100.

The rotating pressure arm 200 can be fixedly connected or detachably connected to the pressing plate 100. As an example, the rotating pressure arm 200 may be integrated with the pressing plate 100, so that the rotating pressure arm 200 is fixedly connected to the pressing plate 100, and so that the rotating pressure arm 200 drives the pressing plate 100 to rotate together. Or, the rotating pressure arm 200 may be sleeved on the pressing plate 100, so that the rotating pressure arm 200 is detachably connected to the pressing plate 100. Or, the rotating pressure arm 200 may be further detachably connected or fixedly connected to the pressing plate 100 through other components. The rotating pressure arm 200 may further rotate relative to the pressing plate 100. For example, the rotating pressure arm 200 may be sleeved on an outer peripheral side of the pressing plate 100, so that the rotating pressure arm 200 rotates relative to the pressing plate 100. Or, the rotating pressure arm 200 is connected to the pressing plate 100 through the other components, and the rotating pressure arm 200 can rotate relative to the other components, so that the rotating pressure arm 200 rotates relative to the pressing plate 100. The rotating pressure arm 200 extends along a direction away from the pressing plate 100. For example, the rotating pressure arm 200 may extend along a direction of a side wall of the pressing plate 100, so as to facilitate the application of a downward pressure to the rotating pressure arm 200, so that the rotating pressure arm 200 presses the to-be-welded member 5 through the pressing plate 100. Or, the rotating pressure arm 200 is connected to one side of the pressing plate 100 facing away from the to-be-welded member 5, and extends along a direction away from the to-be-welded member 5.

During the welding, the pressing plate 100 and/or the rotating pressure arm 200 may shield the to-be-welded position. In this case, the rotating pressure arm 200 may rotate relative to the to-be-welded member 5, to change the position of the edge of the to-be-welded member 5 shielded by the rotating pressure arm 200 and/or the pressing plate 100. As an example, the rotating pressure arm 200 may be fixedly connected to the pressing plate 100. When the to-be-welded member 5 is pressed through the pressing plate assembly 10, both the rotating pressure arm 200 and the pressing plate 100 shield the position of the edge of a portion of the to-be-welded member 5, so that the rotating pressure arm 200 rotates relative to the to-be-welded member 5, and then the rotating pressure arm 200 drives the pressing plate 100 to rotate together relative to the to-be-welded member 5, thereby changing the position of the edge of the to-be-welded member 5 shielded by the rotating pressure arm 200 and the pressing plate 100. Or, as an example, when the to-be-welded member 5 is pressed through the pressing plate assembly 10, only the pressing plate 100 shields the position of the edge of a portion of the to-be-welded member 5, so that the rotating pressure arm 200 rotates relative to the to-be-welded member 5, and then the rotating pressure arm 200 drives the pressing plate 100 to rotate together relative to the to-be-welded member 5, thereby changing the position of the edge of the to-be-welded member 5 shielded by the pressing plate 100. Or, as an example, when the to-be-welded member 5 is pressed through the pressing plate assembly 10, only the rotating pressure arm 200 shields the position of the edge of a portion of the to-be-welded member 5, so that the rotating pressure arm 200 rotates relative to the pressing plate 100, thereby changing the position of the edge of the to-be-welded member 5 shielded by the rotating pressure arm 200.

Through the above embodiments, the pressing plate 100 covers the end surface of the to-be-welded member 5, the rotating pressure arm 200 is connected to the pressing plate 100, and the to-be-welded member 5 may be pressed through the rotating pressure arm 200 and the pressing plate 100, so that the to-be-welded member 5 tightly contacts with other components, which is convenient for welding the to-be-welded member 5 and improving the welding stability. Moreover, the position of the edge of the to-be-welded member 5 shielded by the rotating pressure arm 200 and/or the pressing plate 100 may also be changed through the rotating pressure arm 200, which is convenient for welding along the edge of the to-be-welded member 5 while pressing the to-be-welded member 5, thereby improving the reliability of the welding and the convenience of the welding process.

In some embodiments, the pressing plate 100 is configured to cover a non-edge region of the end surface of the to-be-welded member 5. The end surface of the pressing plate 100 covers the end surface of the to-be-welded member 5, and the pressing plate 100 covers the non-edge region of the end surface of the to-be-welded member 5, which may be understood as that: the pressing plate 100 is configured to cover a middle region of the end surface of the to-be-welded member 5 located on the end surface of the to-be-welded member 5, that is, it does not overlap with an edge region of the end surface of the to-be-welded member 5, or may be understood as that: a projection of the pressing plate 100 on the end surface of the to-be-welded member 5 is located in the middle region of the end surface of the to-be-welded member 5, that is, it does not overlap with the edge region of the end surface of the to-be-welded member 5. The pressing plate 100 covering the end surface of the to-be-welded member 5 may have a similar shape to the end surface of the to-be-welded member 5. As an example, the end surface of the to-be-welded member 5 and the end surface of the pressing plate 100 may be, e.g., runway-shaped, round, or elliptical, and the end surface of the pressing plate 100 may have a slightly smaller area than the end surface of the to-be-welded member 5. When the pressing plate 100 presses the end surface of the to-be-welded member 5, an edge of the end surface of the to-be-welded member 5 may surround an edge of the end surface of the pressing plate 100, so that the pressing plate 100 can shield most of the middle region of the end surface of the to-be-welded member 5 while pressing the to-be-welded member 5. Therefore, the pressing plate 100 covers the non-edge region of the end surface of the to-be-welded member 5, thereby alleviating the interference of the pressing plate 100 with a welding operation along the edge of the to-be-welded member 5, improving the welding efficiency of the welding, and alleviating the risk that weld beads splash onto the end surface of the to-be-welded member 5 during the welding by shielding the end surface of the to-be-welded member 5 through the pressing plate 100.

Further, the rotating pressure arm 200 can rotate relative to the pressing plate 100 to change the position of the edge of the to-be-welded member 5 shielded by the rotating pressure arm 200. The pressing plate 100 is configured to cover the non-edge region of the end surface of the to-be-welded member 5. When the to-be-welded member 5 needs to be welded along the edge of the to-be-welded member 5, only the rotating pressure arm 200 shields the position of the edge of a portion of the to-be-welded member 5, so that the rotating pressure arm 200 rotates relative to the pressing plate 100, thereby changing the position of the edge of the to-be-welded member 5 shielded by the rotating pressure arm 200. The rotating pressure arm 200 may rotate relative to the pressing plate 100. For example, the rotating pressure arm 200 may be sleeved on the outer peripheral side of the pressing plate 100, so that the rotating pressure arm 200 rotates relative to the pressing plate 100. Or, the rotating pressure arm 200 is connected to the pressing plate 100 through the other components, and the rotating pressure arm 200 can rotate relative to the other components, so that the rotating pressure arm 200 rotates relative to the pressing plate 100. Therefore, since the pressing plate 100 covers the non-edge region of the end surface of the to-be-welded member 5, it is only necessary to rotate the rotating pressure arm 200 relative to the pressing plate 100, to change the position of the shielded edge of the to-be-welded member 5, improve the welding efficiency of the welding, and further facilitate welding along the edge of the to-be-welded member 5 while pressing the to-be-welded member 5, thereby improving the reliability of the welding and the convenience of the welding process.

In some embodiments, the pressing plate 100 has a first end surface 110 and a second end surface 120 arranged opposite to each other, the first end surface 110 covers the end surface of the to-be-welded member 5, the pressing plate assembly 10 further comprises a connecting post 300 connected to the pressing plate 100, and the connecting post 300 protrudes from the second end surface 120 and is connected to the rotating pressure arm 200. The connecting post 300 protrudes from the second end surface 120 of the pressing plate 100, thereby reducing the influence of the connecting post 300 on the pressing plate 100. The rotating pressure arm 200 can be fixedly connected or rotationally connected to the pressing plate 100 through the connecting post 300. As an example, the connecting post 300 can be fixedly connected to both the pressing plate 100 and the rotating pressure arm 200, so that the rotating pressure arm 200 is fixedly connected to the pressing plate 100. Or, the connecting post 300 is rotationally connected to the pressing plate 100, and the rotating pressure arm 200 is fixedly connected to the connecting post 300, so that the rotating pressure arm 200 can be rotationally connected to the pressing plate 100 through the connecting post 300. Or, the connecting post 300 is fixedly connected to the pressing plate 100, and the rotating pressure arm 200 is rotationally connected to the connecting post 300, so that the rotating pressure arm 200 rotates relative to the connecting post 300, and then the connecting post 300 rotates relative to the pressing plate 100. Therefore, the rotating pressure arm 200 is connected to the pressing plate 100 through the connecting post 300, thereby contributing to relative rotation of the rotating pressure arm 200 to the to-be-welded member 5 through the connecting post 300, and the connecting post 300 protrudes from the second end surface 120. When the rotating pressure arm 200 is connected to the connecting post 300, the risk caused by the rotating pressure arm 200 when the pressing plate 100 presses the to-be-welded member 5 can also be alleviated.

Further, the connecting post 300 is fixedly connected to the pressing plate 100, one end of the rotating pressure arm 200 is provided with a sleeve hole 210, the rotating pressure arm 200 is sleeved on an outer periphery of the connecting post 300 through the sleeve hole 210, and the rotating pressure arm 200 can rotate relative to the connecting post 300. The connecting post 300 may be integrally formed with the pressing plate 100, or the connecting post 300 may be welded to the pressing plate 100, so that the connecting post 300 is fixedly connected to the pressing plate 100. The sleeve hole 210 may be a through hole, and the sleeve hole 210 may run throughout two side surfaces of the rotating pressure arm 200 in a thickness direction of the rotating pressure arm 200. The sleeve hole 210 may be a cylindrical hole, and at least a portion of the connecting post 300 may be cylindrical. The sleeve hole 210 may be sleeved on the outer periphery of the connecting post 300 that is at least partially cylindrical, so that the rotating pressure arm 200 can rotate relative to the connecting post 300. Therefore, the outer periphery of the connecting post 300 is sleeved through the sleeve hole 210 of the rotating pressure arm 200, so that the rotating pressure arm 200 is connected to the connecting post 300, which can simplify the connection form of the rotating pressure arm 200 and the connecting post 300, facilitate the disassembly and maintenance of the pressing plate assembly 10, and can rotate the rotating pressure arm 200 relative to the connecting post 300 through the sleeve hole 210, and can change the position of the edge of the to-be-welded member 5 shielded by the rotating pressure arm 200 in a simpler way, thereby improving the reliability of the welding and the convenience of the welding process.

In some embodiments, the pressing plate assembly 10 further comprises a bottom member 400, the connecting post 300 is connected to the pressing plate 100 through the bottom member 400, and the bottom member 400 has a larger radial size than the connecting post 300. The bottom member 400 may be columnar, such as cylindrical or polygonal prism-shaped. The bottom member 400 protrudes from an end surface of the pressing plate 100 away from the to-be-welded member 5, and the bottom member 400 has the larger radial size than the connecting post 300. When the rotating pressure arm 200 is sleeved on the connecting post 300, the connecting post 300 may be located on one side of the bottom member 400 away from the pressing plate 100. When the rotating pressure arm 200 is sleeved on the connecting post 300 through the sleeve hole 210, one side surface of the rotating pressure arm 200 facing the pressing plate 100 may overlap the bottom member 400, to space the rotating pressure arm 200 from the pressing plate 100, thereby alleviating the risk of damaging the rotating pressure arm 200 and the pressing plate 100 caused by mutual friction between the rotating pressure arm 200 and the pressing plate 100 during the rotation.

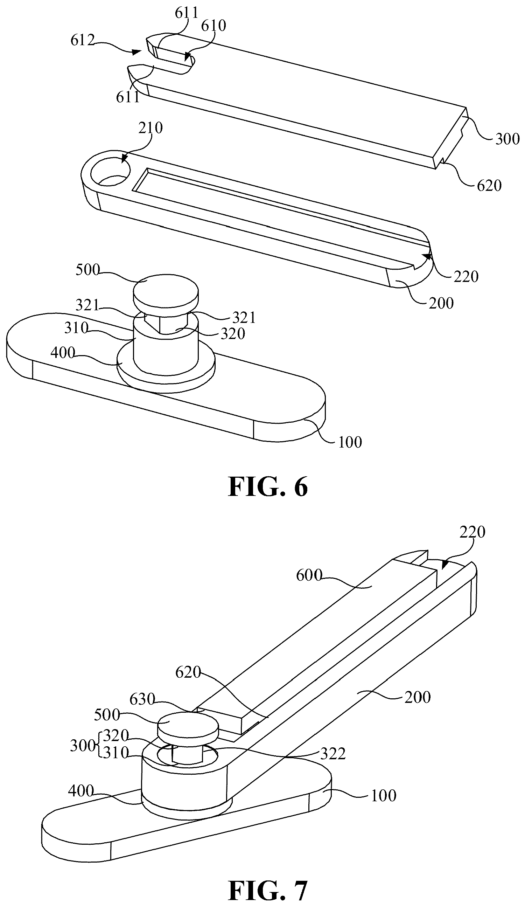

Referring to FIGS. 4 to 6, FIG. 4 is a schematic diagram of a first state of a first structure of a pressing plate assembly according to one or more embodiments; FIG. 5 is a schematic diagram of a second state of a first structure of a pressing plate assembly according to one or more embodiments; and FIG. 6 is a schematic disassembly diagram of the pressing plate assembly shown in FIG. 4.

The connecting post 300 comprises a sleeve portion 310 and a clamp-stopping portion 320 that are coaxially arranged, the rotating pressure arm 200 is sleeved on an outer periphery of the sleeve portion 310 through the sleeve hole 210, the pressing plate assembly 10 further comprises a locking member 600, the locking member 600 is connected to the rotating pressure arm 200, and the locking member 600 is configured to match the clamp-stopping portion 320 to keep the connecting post 300 and the rotating pressure arm 200 relatively fixed. The sleeve portion 310 may be cylindrical, the sleeve hole 210 may be a cylindrical hole, and the sleeve hole 210 may be sleeved on the outer periphery of the cylindrical sleeve portion 310, so that the rotating pressure arm 200 can rotate relative to the connecting post 300. The clamp-stopping portion 320 may be closer to the pressing plate 100 than the sleeve portion 310, or the clamp-stopping portion 320 may be farther away from the pressing plate 100 than the sleeve portion 310. The locking member 600 may be close to the clamp-stopping portion 320 so that the clamp-stopping portion 320 and the locking member 600 match and are kept relatively fixed, or the locking member 600 may be away from the clamp-stopping portion 320 so that the clamp-stopping portion 320 and the locking member 600 are relieved from the matching state. As an example, as shown in FIG. 4, the locking member 600 is connected to the rotating pressure arm 200. When the locking member 600 is away from the clamp-stopping portion 320 and is relieved from the matching state with the clamp-stopping portion 320, the locking member 600 and the clamp-stopping portion 320 are relieved from the relatively fixed state, thereby relieving a locking state between the rotating pressure arm 200 and the connecting post 300, that is, the pressing plate assembly 10 enters a non-locking state. In the non-locking state, the rotating pressure arm 200 can drive the locking member 600 to rotate together relative to the connecting post 300. As an example, as shown in FIG. 5, the locking member 600 is connected to the rotating pressure arm 200. When the locking member 600 is close to the clamp-stopping portion 320 and matches the clamp-stopping portion 320, the pressing plate assembly 10 can enter the locking state. In the locking state, the locking member 600 and the clamp-stopping portion 320 are kept relatively fixed, thereby keeping the rotating pressure arm 200 and a fixing member relatively fixed. Therefore, the locking member 600 may be fitted with the clamp-stopping portion 320 to keep the rotating pressure arm 200 and the connecting post 300 relatively fixed, thereby further keeping the rotating pressure arm 200, the connecting post 300, and the pressing plate 100 relatively fixed, and alleviating the risk of affecting the welding because the rotating pressure arm 200 rotates by mistake when rotation is not required.

Further, one of the rotating pressure arm 200 and the locking member 600 is provided with a sliding groove 220 extending in a direction away from the connecting post 300, the other one of the rotating pressure arm and the locking member is provided with a sliding portion 620 slidably fitted with the sliding groove 220, and the sliding portion 620 is configured to slide in the sliding groove 220, to make the locking member 600 be close to or away from the clamp-stopping portion 320. In an embodiment, the sliding groove 220 is located on one side of the rotating pressure arm 200 facing the locking member 600, and the sliding portion 620 is arranged on one side of the locking member 600 facing the rotating pressure arm 200. The sliding portion 620 can slide in the sliding groove 220 to function for guiding through the sliding groove 220, so that the locking member 600 can be close to or away from the clamp-stopping portion 320. In another embodiment, the sliding groove 220 is located on the one side of the locking member 600 facing the rotating pressure arm 200, and the sliding portion 620 is arranged on the one side of the rotating pressure arm 200 facing the locking member 600. The sliding portion 620 can slide in the sliding groove 220 to function for guiding through the sliding groove 220, so that the locking member 600 can be close to or away from the clamp-stopping portion 320. Therefore, the sliding portion 620 slides in the sliding groove 220, to make the locking member 600 be close to or away from the clamp-stopping portion 320, thereby simplifying the way of keeping the rotating pressure arm 200 and the connecting post 300 relatively fixed through the locking member 600, simplifying the way of relieving the relative fixation between the rotating pressure arm 200 and the connecting post 300, improving the efficiency of fixing or relieving the fixation, and further improving the processing efficiency of welding.

In some embodiments, the sleeve portion 310 is closer to the pressing plate 100 than the clamp-stopping portion 320. The sleeve portion 310 and the clamp-stopping portion 320 are coaxially arranged, and the sleeve portion 310 may be located between the clamp-stopping portion 320 and the bottom member 400. The sleeve portion 310 is closer to the pressing plate 100 than the clamp-stopping portion 320, that is, the sleeve portion 310 is located on a lower side of the clamp-stopping portion 320, and when the rotating pressure arm 200 is sleeved on the sleeve portion 310, the rotating pressure arm 200 may be supported on the bottom member 400. The clamp-stopping portion 320 is located on an upper side of the sleeve portion 310, and the locking member 600 may also be correspondingly carried on the rotating pressure arm 200, so that the locking member 600 can be fixed to the rotating pressure arm 200 without using other additional fixing methods. The sleeve portion 310 may have a larger radial size than the clamp-stopping portion 320, to separate the rotating pressure arm 200 from the connecting post 300 from one end of the clamp-stopping portion 320 through the sleeve hole 210, or further sleeve the rotating pressure arm 200 on the sleeve portion 310 from one end of the clamp-stopping portion 320 through the sleeve hole 210. Therefore, the sleeve portion 310 is closer to the pressing plate 100 than the clamp-stopping portion 320, thereby making it easier for the rotating pressure arm 200 to press the to-be-welded member 5 through the pressing plate 100, improving the pressing effect, and the clamp-stopping portion 320 is away from the pressing plate 100, thereby further facilitating fitting of the locking member 600 with the clamp-stopping portion 320 to fix the rotating pressure arm 200.

In some embodiments, the pressing plate assembly 10 further comprises a top member 500, the top member 500 is fixed to one end of the clamp-stopping portion 320 away from the pressing plate 100, and the top member 500 has a larger radial size than the clamp-stopping portion 320. The top member 500 may be columnar, such as cylindrical or polygonal prism-shaped, and the top member 500 has the larger radial size than the clamp-stopping portion 320. When the locking member 600 matches the clamp-stopping portion 320, the locking member 600 may be limited through the top member 500 and the rotating pressure arm 200, so as to clamp the locking member 600 between the top member 500 and the rotating pressure arm 200, and then clamp the rotating pressure arm 200 between the locking member 600 and the pressing plate 100, keep the rotating pressure arm 200, the locking member 600, and the pressing plate 100 relatively fixed, and alleviate separation of the rotating pressure arm 200 and the locking member 600 from the pressing plate 100 after locking. In some other embodiments, the clamp-stopping portion 320 may have a smaller radial size than the sleeve portion 310, and the top member 500 may have a radial size larger than or equal to the radial size of the sleeve portion 310. Therefore, the top member 500 has the larger radial size than the clamp-stopping portion 320. When the locking member 600 is fitted with the clamp-stopping portion 320 to fix the rotating pressure arm 200, the top member 500 can limit the locking member 600 and the rotating pressure arm 200, thereby alleviating the risk of detaching the rotating pressure arm 200 from the pressing plate 100.

Further, an outer wall surface of the clamp-stopping portion 320 comprises at least one pair of first clamp-stopping surfaces 321 arranged along a radial direction of the clamp-stopping portion 320, the locking member 600 is provided with a clamp-stopping groove 610, an inner wall surface of the clamp-stopping groove 610 comprises at least one pair of second clamp-stopping surfaces 611 arranged along the radial direction of the clamp-stopping portion 320, the clamp-stopping portion 320 is located in the clamp-stopping groove 610, and one of the first clamp-stopping surfaces 321 abuts against a corresponding second clamp-stopping surface 611 among the second clamp-stopping surfaces, to keep the connecting post 300 and the rotating pressure arm 200 relatively fixed. There may be one pair or a plurality of pairs of first clamp-stopping surfaces 321. When there is one pair of first clamp-stopping surfaces 321, the two first clamp-stopping surfaces 321 may be opposite to and spaced apart from each other along the radial direction of the clamp-stopping portion 320. When there are a plurality of pairs of first clamp-stopping surfaces 321, the plurality of first clamp-stopping surfaces 321 may be connected sequentially along a circumferential direction of the clamp-stopping portion 320, so that the plurality of first clamp-stopping surfaces 321 are fitted to form a prism shape. As an example, when there are two pairs of first clamp-stopping surfaces 321, the two pairs of first clamp-stopping surfaces 321 may be fitted to form a quadrangular prism. When there are three pairs of first clamp-stopping surfaces 321, the three pairs of first clamp-stopping surfaces 321 may be fitted to form a hexagonal prism. One pair of second clamp-stopping surfaces 611 may correspond to one pair of first clamp-stopping surfaces 321. When one of the first clamp-stopping surfaces 321 abuts against a corresponding second clamp-stopping surface 611, the connecting post 300 and the rotating pressure arm 200 may be kept relatively fixed. There may be one pair of second clamp-stopping surfaces 611. When the rotating pressure arm 200 rotates to a particular position, the one pair of second clamp-stopping surfaces may abut against one pair of first clamp-stopping surfaces 321 at a corresponding position, to keep the connecting post 300 and the rotating pressure arm 200 relatively fixed. As an example, when there is one pair of first clamp-stopping surfaces 321, the rotating pressure arm 200 needs to rotate to a particular position corresponding to the pair of first clamp-stopping surfaces 321, and then the locking member 600 is moved close to the clamp-stopping portion 320, so that the clamp-stopping portion 320 is located in the clamp-stopping groove 610. In this case, one pair of first clamp-stopping surfaces 321 abuts against a corresponding pair of second clamp-stopping surfaces 611, to keep the connecting post 300 and the rotating pressure arm 200 relatively fixed. When there are a plurality of pairs of first clamp-stopping surfaces 321, each pair of first clamp-stopping surfaces 321 may correspond to a particular position. When the rotating pressure arm 200 rotates to a particular position corresponding to a first clamp-stopping surface 321, the locking member 600 is moved close to the clamp-stopping portion 320, so that the clamp-stopping portion 320 is located in the clamp-stopping groove 610. In this case, one pair of first clamp-stopping surfaces 321 corresponding to the particular position abuts against the second clamp-stopping surface 611, to keep the connecting post 300 and the rotating pressure arm 200 relatively fixed. Therefore, the at least one pair of first clamp-stopping surfaces 321 arranged on the clamp-stopping portion 320 abuts against the at least one pair of second clamp-stopping surfaces 611 on an inner wall of the clamp-stopping groove 610, so that the locking member 600 is fitted with the clamp-stopping portion 320 to keep the rotating pressure arm 200 and the connecting post 300 relatively fixed, thereby alleviating the risk of affecting the welding because the rotating pressure arm 200 rotates by mistake when rotation is not required, achieving simple overall structure, contributing to processing and manufacturing, and reducing the production costs.

Further, a groove mouth 612 of the clamp-stopping groove 610 faces the clamp-stopping portion 320, and the locking member 600 enables the clamp-stopping portion 320 to be located in the clamp-stopping groove 610 through the groove mouth 612 of the clamp-stopping groove 610; or the locking member 600 enables the clamp-stopping portion 320 to exit from the clamp-stopping groove 610 through the groove mouth 612 of the clamp-stopping groove 610. The groove mouth 612 of the clamp-stopping groove 610 may face the clamp-stopping portion 320. When the locking member 600 moves in a direction close to the clamp-stopping portion 320, the clamp-stopping portion 320 can be positioned in the clamp-stopping groove 610 through the groove mouth 612, so that the first clamp-stopping surface 321 abuts against the second clamp-stopping surface 611, thereby keeping the connecting post 300 and the rotating pressure arm 200 relatively fixed, so that the pressing plate assembly 10 enters the locking state. In the locking state, the locking member 600 and the clamp-stopping portion 320 are kept relatively fixed, to keep the rotating pressure arm 200 and the fixing member relatively fixed. When it is necessary to relieve the relatively fixed state between the connecting post 300 and the rotating pressure arm 200, the locking member 600 can move in a direction away from the clamp-stopping portion 320, so that the clamp-stopping portion 320 exits from the clamp-stopping groove 610 through the groove mouth 612, thereby relieving the abutting state between the first clamp-stopping surface 321 and the second clamp-stopping surface 611, and enabling the pressing plate assembly 10 to enter the non-locking state. In the non-locking state, the rotating pressure arm 200 can drive the locking member 600 to rotate together relative to the connecting post 300. Therefore, the groove mouth 612 of the clamp-stopping groove 610 is arranged facing the clamp-stopping portion 320, so that the groove mouth 612 of the clamp-stopping groove 610 enables the clamp-stopping portion 320 to be located in the clamp-stopping groove 610 or enables the clamp-stopping portion 320 to exit from the clamp-stopping groove 610, thereby simplifying the way of keeping the rotating pressure arm 200 and the connecting post 300 relatively fixed through the locking member 600, simplifying the way of relieving the relative fixation between the rotating pressure arm 200 and the connecting post 300, improving the efficiency of fixing or relieving the fixation, and further improving the processing efficiency of welding.

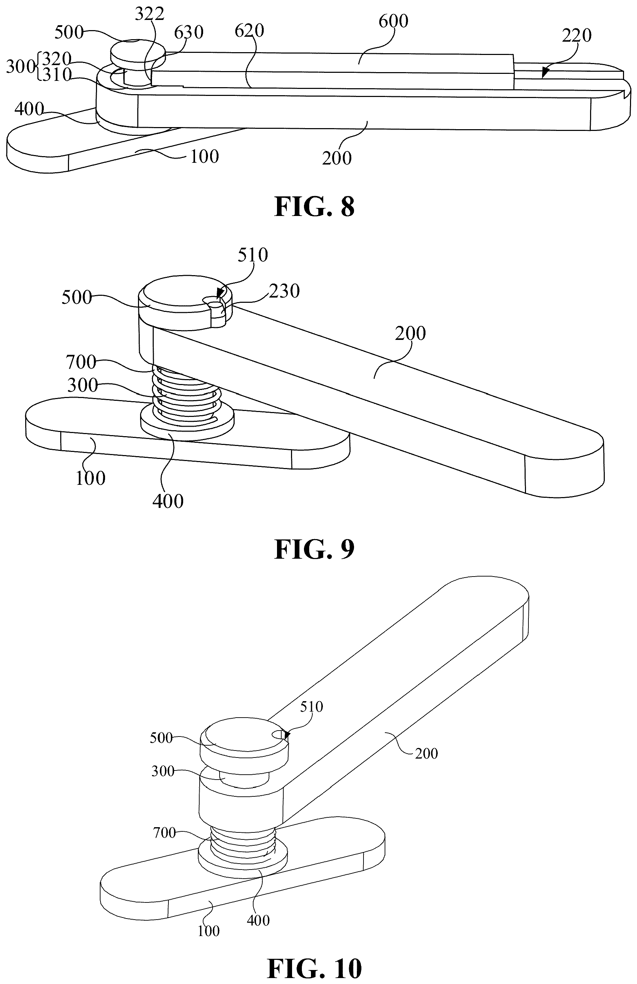

Referring to FIGS. 7 and 8, FIG. 7 is a schematic diagram of a first state of a second structure of a pressing plate assembly according to one or more embodiments; and FIG. 8 is a schematic diagram of a second state of a second structure of a pressing plate assembly according to one or more embodiments.

The outer wall surface of the clamp-stopping portion 320 comprises a first abutting surface 322, one side surface of the locking member 600 facing the clamp-stopping portion 320 comprises a second abutting surface 630, and the locking member 600 abuts against the second abutting surface 630 through the first abutting surface 322, to keep the connecting post 300 and the rotating pressure arm 200 relatively fixed.

FIG. 7 is a schematic structural diagram of the pressing plate assembly 10 in a non-locking state in this embodiment, and FIG. 8 is a schematic structural diagram of the pressing plate assembly 10 in a locking state in this embodiment. The first abutting surface 322 and the second abutting surface 630 may be planar. When the first abutting surface 322 abuts against the second abutting surface 630, the pressing plate assembly 10 is in a locking state, that is, the connecting post 300 and the rotating pressure arm 200 are kept relatively fixed. When the first abutting surface 322 is separated from the second abutting surface 630, the pressing plate assembly 10 is in a non-locking state, that is, the connecting post 300 and the rotating pressure arm 200 can rotate relative to each other. There may be one or more first abutting surfaces 322. As an example, there may be two first abutting surfaces 322, and the two first abutting surfaces 322 are arranged opposite to each other along the radial direction of the clamp-stopping portion 320, or there may be a plurality of first abutting surfaces 322, and the plurality of first abutting surfaces 322 may be sequentially connected along a circumferential direction of the clamp-stopping portion 320, so that the plurality of first abutting surfaces 322 are fitted to form a prism shape. One second abutting surface 630 may correspond to one first abutting surface 322. When a first abutting surface 322 abuts against a corresponding second abutting surface 630, the connecting post 300 and the rotating pressure arm 200 are kept relatively fixed. As an example, when the rotating pressure arm 200 rotates to a particular position, the second abutting surface 630 abuts against a first abutting surface 322 at a corresponding position, to keep the connecting post 300 and the rotating pressure arm 200 relatively fixed. Therefore, the first abutting surface 322 arranged on the clamp-stopping portion 320 abuts against the second abutting surface 630 arranged on the locking member 600, so that the locking member 600 is fitted with the clamp-stopping portion 320 to keep the rotating pressure arm 200 and the connecting post 300 relatively fixed, thereby alleviating the risk of affecting the welding because the rotating pressure arm 200 rotates by mistake when rotation is not required, achieving simple overall structure, contributing to processing and manufacturing, and reducing the production costs.

It should be noted that the pressing plate assembly 10 disclosed in this embodiment may only be different from the pressing plate assembly 10 disclosed in the above embodiments in the way in which the locking member 600 matches the clamp-stopping portion 320, may have identical or similar other structures to the structures in the above embodiments, and will not be repeated here.

Referring to FIGS. 9 and 10, FIG. 9 is a schematic diagram of a first state of a third structure of a pressing plate assembly according to one or more embodiments; and FIG. 10 is a schematic diagram of a second state of a third structure of a pressing plate assembly according to one or more embodiments.

The pressing plate assembly 10 further comprises a top member 500 and an elastic member 700, the top member 500 is fixed to one end of the connecting post 300 away from the pressing plate 100, the top member 500 has a larger radial size than the connecting post 300, the rotating pressure arm 200 is located between the elastic member 700 and the top member 500, and the elastic member 700 is elastically supported between the rotating pressure arm 200 and the pressing plate 100.

The top member 500 may be columnar, such as cylindrical or polygonal prism-shaped. The top member 500 may be detachably fixedly connected to the one end of the connecting post 300 away from the pressing plate 100. As an example, the top member 500 may comprise a screw bolt, and the connecting post 300 may be provided with a screw hole corresponding to the screw bolt. The screw bolt of the top member 500 is inserted into the screw hole of the connecting post 300 to detachably connect the top member 500 and the connecting post 300. The top member 500 has a larger radial size than the connecting post 300, that is, the elastic member 700 and the rotating pressure arm 200 can be limited between the top member 500 and the pressing plate 100. The rotating pressure arm 200 is located between the elastic member 700 and the top member 500, and the elastic member 700 is elastically supported between the rotating pressure arm 200 and the pressing plate 100. The elastic member 700 can space the rotating pressure arm 200 from the pressing plate 100, thereby alleviating the risk of damaging the rotating pressure arm 200 and the pressing plate 100 caused by mutual friction between the rotating pressure arm 200 and the pressing plate 100 during the rotation. In a natural state, a supporting force provided by the elastic member 700 to the rotating pressure arm 200 may be slightly larger than gravity of the rotating pressure arm 200, so that the elastic member 700 can abut the rotating pressure arm 200 against the top member 500 to keep the rotating pressure arm 200 in a stationary state. When the rotating pressure arm 200 needs to rotate, the rotating pressure arm 200 may first apply a downward pressure to the elastic member 700, and simultaneously apply an impetus for rotation along a circumferential direction to the rotating pressure arm 200, so that relative rotation occurs between the rotating pressure arm 200 and the pressing plate 100. Therefore, the rotating pressure arm 200 is elastically supported between the top member 500 and the pressing plate 100 through the elastic member 700, thereby alleviating the risk of separating the rotating pressure arm 200 from the pressing plate 100, pressing the to-be-welded member 5 by the rotating pressure arm 200 through the elastic member 700 and the pressing plate 100, improving the pressing effect, and further improving the processing efficiency of welding.

Further, the elastic member 700 is sleeved on a peripheral side of the connecting post 300. The elastic member 700 may be a spring structure, so that the spring is sleeved on the peripheral side of the connecting post 300, one end of the elastic member 700 abuts against the pressing plate 100, and the other end of the elastic member abuts against the rotating pressure arm 200. Thus, the elastic member 700 is sleeved on the peripheral side of the connecting post 300, thereby improving the stability of elastically supporting the rotating pressure arm 200 by the elastic member 700, and alleviating the risk of detaching the elastic member 700 from the connecting post 300.

In some embodiments, the pressing plate assembly 10 further comprises a bottom member 400, the bottom member 400 has a larger radial size than the connecting post 300, the connecting post 300 is connected to the pressing plate 100 through the bottom member 400, and the elastic member 700 is elastically supported between the rotating pressure arm 200 and the bottom member 400. The bottom member 400 may be columnar, such as cylindrical or polygonal prism-shaped. The bottom member 400 protrudes from an end surface of the pressing plate 100 away from the to-be-welded member 5, and the bottom member 400 has the larger radial size than the connecting post 300. When the rotating pressure arm 200 is sleeved on the connecting post 300, the connecting post 300 may be located on one side of the bottom member 400 away from the pressing plate 100. When the rotating pressure arm 200 is sleeved on the connecting post 300 through the sleeve hole 210, one side surface of the rotating pressure arm 200 facing the pressing plate 100 may further run through the spacing between the bottom member 400 and the pressing plate 100. The bottom member 400 has the larger radial size than the connecting post 300, the connecting post 300 is connected to the pressing plate 100 through the bottom member 400, thereby improving the stability of the connection between the connecting post 300 and the pressing plate 100, and the elastic member 700 is elastically supported between the rotating pressure arm 200 and the bottom member 400, thereby further improving the stability of elastically supporting the rotating pressure arm 200 by the elastic member 700.

In some embodiments, one of the top member 500 and the rotating pressure arm 200 is provided with a fixing groove 510, the other one of the top member and the rotating pressure arm is provided with a fixing portion 230 corresponding to the fixing groove 510, and the fixing portion 230 is inserted into the fixing groove 510, to keep the connecting post 300 and the rotating pressure arm 200 relatively fixed.

FIG. 9 is a schematic structural diagram of the pressing plate assembly 10 in a locking state in this embodiment, and FIG. 10 is a schematic structural diagram of the pressing plate assembly 10 in a non-locking state in this embodiment. In one embodiment, the fixing groove 510 may be located on the top member 500, and the fixing portion 230 may protrude from one side of the rotating pressure arm 200 facing away from the pressing plate 100. In another embodiment, the fixing groove 510 may be located on the rotating pressure arm 200, and the fixing portion 230 may protrude from one side of the top member 500 facing the pressing plate 100. There may be one-to-one corresponding relationship between the fixing portion 230 and the fixing groove 510. When the pressing plate assembly 10 needs to be in the locking state, the fixing portion 230 is inserted into the fixing groove 510. When the rotating pressure arm 200 needs to rotate relative to the pressing plate 100, the rotating pressure arm 200 may be first pressed down to separate the fixing portion 230 from the fixing groove 510, and then a force for rotation along the circumferential direction is applied to the rotating pressure arm 200, to rotate the rotating pressure arm 200 relative to the pressing plate 100. As an example, taking FIGS. 9 and 10 as examples, when the rotating pressure arm 200 is in the locking state of FIG. 9, a downward pressure may be first applied to the rotating pressure arm 200 to separate the fixing groove 510 from the fixing portion 230, and then a force for rotation along the circumferential direction is applied to the rotating pressure arm 200 while continuously applying the downward pressure, so that the rotating pressure arm 200 rotates to the non-locking state of FIG. 10. When it is necessary to maintain the non-locking state of FIG. 10, the external force applied to the rotating pressure arm 200 can be removed. When it is necessary to adjust the non-locking state of FIG. 10 to the locking state of FIG. 9, a downward pressure may be re-applied to the rotating pressure arm 200, and a force for rotation along the circumferential direction is re-applied to the rotating pressure arm 200, so that the rotating pressure arm 200 rotates to the locking state of FIG. 9. Therefore, the fixing groove 510 and the fixing portion 230 are used to keep the connecting post 300 and the rotating pressure arm 200 relatively fixed, thereby further keeping the rotating pressure arm 200, the connecting post 300, and the pressing plate 100 relatively fixed, and alleviating the risk of affecting the welding because the rotating pressure arm 200 rotates by mistake when rotation is not required.

To sum up, the pressing plate 100 covers the end surface of the to-be-welded member 5, the rotating pressure arm 200 is connected to the pressing plate 100, and the to-be-welded member 5 may be pressed through the rotating pressure arm 200 and the pressing plate 100, so that the to-be-welded member 5 tightly contacts with other components, which is convenient for welding the to-be-welded member 5 and improving the welding stability. Moreover, the position of the edge of the to-be-welded member 5 shielded by the rotating pressure arm 200 and/or the pressing plate 100 may also be changed through the rotating pressure arm 200, which is convenient for welding along the edge of the to-be-welded member 5 while pressing the to-be-welded member 5, thereby improving the reliability of the welding and the convenience of the welding process.

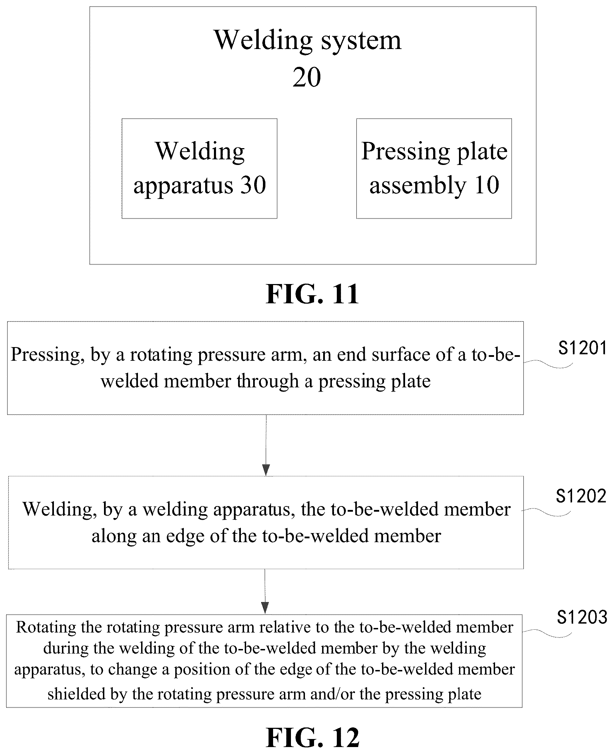

In order to solve the technical problems existing in the relevant embodiments, the present application further provides a welding system, as shown in FIG. 11. FIG. 11 is a schematic structural block diagram of a welding system according to one or more embodiments.

The welding system 20 comprises a welding apparatus 30 and the pressing plate assembly 10 in any of the above embodiments, the pressing plate assembly 10 is configured to press a to-be-welded member 5, and the welding apparatus 30 is configured to weld the to-be-welded member 5 along an edge of the to-be-welded member 5.

The welding apparatus 30 may be a laser welding apparatus with high welding efficiency and safety performance of laser welding. The laser welding means to heat a to-be-processed surface by laser radiation with surface heat diffusion inward through heat conduction, melt a workpiece by controlling laser parameters such as width, energy, peak power and repetition frequency of the laser pulse, to form a particular weld pool, thereby welding two components together. Of course, in other embodiments, the welding apparatus may include, but is not limited to, a gas welding apparatus, a fusion welding apparatus, an ultrasonic welding apparatus, etc. The welding system 20 may further comprise other apparatuses, such as a pressing apparatus or a conveying apparatus. The pressing apparatus may be configured to press the rotating pressure arm 200, so that the rotating pressure arm 200 presses the to-be-welded member 5 through the pressing plate 100, etc. The conveying apparatus can convey the to-be-welded member 5 to a welding station, etc.

In order to solve the technical problems existing in the relevant embodiments, the present application further provides a welding method, which may be applied to the above welding system 20, as shown in FIG. 12. FIG. 12 is a schematic flowchart of a welding method according to one or more embodiments, specifically including the following steps S1201 to S1203.

Step S1201: pressing, by the rotating pressure arm, an end surface of the to-be-welded member through the pressing plate.

The to-be-welded member 5 may be the above terminal post cover plate 2. Of course, in other application scenarios, the to-be-welded member 5 may also be other to-be-welded components. As an example, when the to-be-welded member 5 is the terminal post cover plate 2, the terminal post cover plate 2 may be installed in a hollow groove of the terminal post body 3, then the battery cell 1 may be transported to a welding station, then the pressing plate 100 covers the end surface of the terminal post cover plate 2 at the welding station, and a downward pressing external force is applied to the rotating pressure arm 200, so that the rotating pressure arm 200 presses the end surface of the to-be-welded member 5 through the pressing plate 100, and so that the terminal post cover plate 2 tightly contacts with the terminal post body 3, thereby contributing to subsequent welding of the terminal post cover plate 2, and improving the welding stability.

Step S1202: welding, by the welding apparatus, the to-be-welded member along an edge of the to-be-welded member.

The welding apparatus 30 may include, but is not limited to, a laser welding apparatus, a gas welding apparatus, a fusion welding apparatus, an ultrasonic welding apparatus, etc. The edge of the to-be-welded member 5 may be understood as an edge of the end surface of the to-be-welded member 5, or a side edge of the to-be-welded member 5 connected to the end surface of the to-be-welded member 5. As an example, taking the to-be-welded member 5 being the terminal post cover plate 2 as an example, when the terminal post cover plate 2 is installed in the hollow groove of the terminal post body 3, the connection between an outer edge of the terminal post cover plate 2 and an inner edge of a groove mouth of the terminal post body 3 may be an edge position where welding by the welding apparatus 30 is required.

Step S1203: rotating the rotating pressure arm relative to the to-be-welded member during the welding of the to-be-welded member by the welding apparatus, to change a position of the edge of the to-be-welded member shielded by the rotating pressure arm and/or the pressing plate.

The process of the welding, by the welding apparatus 30, the to-be-welded member 5 may be understood as: the process of uninterruptedly welding the to-be-welded member 5 by the welding apparatus 30, or the entire process from starting welding to completing final welding by the welding apparatus 30 without considering whether the welding is interrupted, each of which may be the process of the welding, by the welding apparatus 30, the to-be-welded member 5. During the welding, the pressing plate 100 and/or the rotating pressure arm 200 may shield the to-be-welded position. In this case, the rotating pressure arm 200 may rotate relative to the to-be-welded member 5, to change the position of the edge of the to-be-welded member 5 shielded by the rotating pressure arm 200 and/or the pressing plate 100. As an example, the rotating pressure arm 200 may be fixedly connected to the pressing plate 100. When the to-be-welded member 5 is pressed through the pressing plate assembly 10, both the rotating pressure arm 200 and the pressing plate 100 shield the position of the edge of a portion of the to-be-welded member 5, so that the rotating pressure arm 200 rotates relative to the to-be-welded member 5, and then the rotating pressure arm 200 drives the pressing plate 100 to rotate together relative to the to-be-welded member 5, thereby changing the position of the edge of the to-be-welded member 5 shielded by the rotating pressure arm 200 and the pressing plate 100. Or, as an example, when the to-be-welded member 5 is pressed through the pressing plate assembly 10, only the pressing plate 100 shields the position of the edge of a portion of the to-be-welded member 5, so that the rotating pressure arm 200 rotates relative to the to-be-welded member 5, and then the rotating pressure arm 200 drives the pressing plate 100 to rotate together relative to the to-be-welded member 5, thereby changing the position of the edge of the to-be-welded member 5 shielded by the pressing plate 100. Or, as an example, when the to-be-welded member 5 is pressed through the pressing plate assembly 10, only the rotating pressure arm 200 shields the position of the edge of a portion of the to-be-welded member 5, so that the rotating pressure arm 200 rotates relative to the pressing plate 100, thereby changing the position of the edge of the to-be-welded member 5 shielded by the rotating pressure arm 200.

Through the above embodiments, the to-be-welded member 5 is pressed through the rotating pressure arm 200 and the pressing plate 100, so that the to-be-welded member 5 tightly contacts with other components, which is convenient for welding the to-be-welded member 5 and improving the welding stability. Moreover, the position of the edge of the to-be-welded member 5 shielded by the rotating pressure arm 200 and/or the pressing plate 100 may also be changed through the rotating pressure arm 200 during the welding, which is convenient for welding along the edge of the to-be-welded member 5 while pressing the to-be-welded member 5, thereby improving the reliability of the welding and the convenience of the welding process.

In some embodiments, the rotating the rotating pressure arm 200 relative to the pressing plate 100 comprises: rotating the rotating pressure arm 200 along a welding direction X of the welding along the edge of the to-be-welded member 5 by the welding apparatus 30. The welding direction X may be understood as a direction of a welding track formed by the welding apparatus 30 during the welding. For example, when the welding apparatus 30 welds the edge of the to-be-welded member 5 clockwise, the welding direction X is clockwise direction, and when the welding apparatus 30 welds the edge of the to-be-welded member 5 counterclockwise, the welding direction X is counterclockwise direction. In this embodiment, the pressing plate 100 may press a non-edge region of the end surface of the to-be-welded member 5, and the rotating pressure arm 200 may rotate relative to the pressing plate 100, that is, the rotating pressure arm 200 rotates, while the pressing plate 100 does not rotate. Before the rotating pressure arm 200 rotates, the pressing plate assembly 10 may be first made to enter a non-locking state from a locking state, and then rotate along the welding direction X. Therefore, the rotating pressure arm 200 rotates along the welding direction X, thereby not only changing the position of the edge of the to-be-welded member 5 shielded by the rotating pressure arm 200, but also enabling the welding apparatus 30 to uninterruptedly weld along the edge of the to-be-welded member 5, improving the welding efficiency, and further alleviating the risk of welding errors caused by welding interruptions.

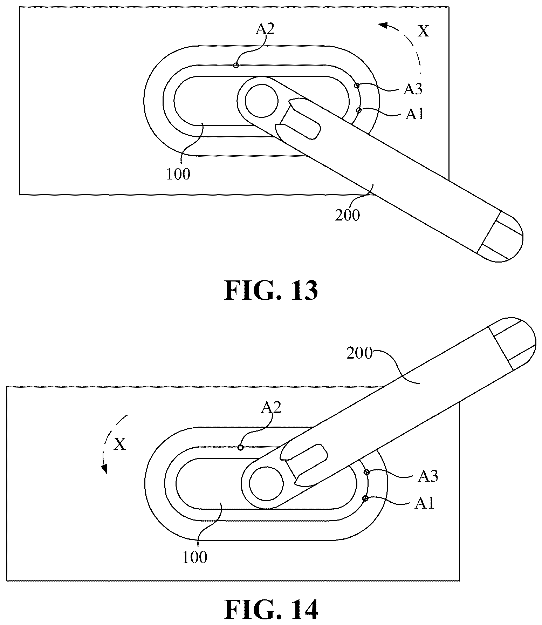

Referring to FIGS. 13 and 14, FIG. 13 is a schematic structural diagram of a pressing plate assembly pressing a to-be-welded member at a first position according to one or more embodiments. FIG. 14 is a schematic structural diagram of a pressing plate assembly pressing a to-be-welded member at a second position according to one or more embodiments.

The rotating the rotating pressure arm 200 relative to the pressing plate 100 comprises: if it is detected that the welding apparatus 30 welds from a first point position A1 to a second point position A2; wherein the first point position A1 is closer to the rotating pressure arm 200 than the second point position A2 in the welding direction X of the welding along the edge of the to-be-welded member 5 by the welding apparatus 30; rotating the rotating pressure arm 200 along the welding direction X from a first position to a second position; wherein the first position comprises a position where the rotating pressure arm 200 is not located between the first point position A1 and the second point position A2 in the welding direction X, and the second position comprises a position where the rotating pressure arm 200 shields an area between the first point position A1 and the second point position A2 in the welding direction X.

As shown in FIG. 13, when the rotating pressure arm 200 is at the first position, the welding apparatus 30 may start welding from the first point position A1 to the second point position A2 in the counterclockwise direction. The first point position A1 may be a position close to the rotating pressure arm 200, for example, the first point position A1 is a position with a predetermined spacing from the rotating pressure arm 200. As an example, the predetermined spacing may be, e.g., a position with the predetermined spacing of larger than 2 mm, thereby alleviating the influence of the rotating pressure arm 200 on the welding apparatus 30 during the welding. The second point position A2 may be any position, for example, the second point position A2 may be: a path length between the first point position A1 and the second point position A2 along the welding direction X accounting for one third, one half, or two fifths of an edge path length of the to-be-welded member 5, etc. As shown in FIG. 14, when it is detected that the welding apparatus 30 welds to the second point position A2, a control signal can be generated to control the rotating pressure arm 200 to rotate from the first position to the second position based on the control signal. At the second position, the rotating pressure arm 200 may only shield the edge of the to-be-welded member 5 between the first point position A1 and the second point position A2. Since the welding operation of the edge of the to-be-welded member 5 between the first point position A1 and the second point position A2 has been completed, the rotating pressure arm 200 rotates to this position, thereby alleviating the rotating pressure arm 200 from shielding edges of other to-be-welded members 5 that have not been welded. Therefore, after the welding apparatus 30 welds from the first point position A1 to the second point position A2, the rotating pressure arm 200 rotates from the first position to the second position to change the position shielded by the rotating pressure arm 200 from the first position that has not been welded to the second position that has been welded, thereby continuously pressing the to-be-welded member 5 through the pressing plate 100 without affecting the welding, and alleviating the risk of welding errors caused by welding interruptions while improving the welding efficiency.

In some embodiments, the welding, by the welding apparatus 30, the to-be-welded member 5 along the edge of the to-be-welded member 5 comprises: welding, by the welding apparatus 30, along the edge of the to-be-welded member 5 to form an end-to-end closed welding track; and welding, by the welding apparatus 30, to a third point position A3 along end-to-end closure to form a closing track; wherein the third point position A3 is on or outside the welding track. The end-to-end closed welding track may be understood as that: the welding apparatus 30 starts welding the edge of the to-be-welded member 5 from a starting point position along the welding direction X until re-welding to the starting point position to form an annular end-to-end closed welding track. Taking FIGS. 13 and 14 as examples, welding is performed from the first point position A1 as the starting point position along the welding direction X through the second point position A2 and then to the first point position A1 to form the annular end-to-end closed welding track. After forming the end-to-end closed welding track, the welding apparatus 30 can continue welding to the third point position A3, and the third point position A3 may be any position other than the end surface of the to-be-welded member 5. As an example, the third point position A3 may be a position between the first point position A1 and the second point position A2 along the welding direction X, or the third point position A3 may further be a position located outside the edge of the to-be-welded member 5. For example, when the to-be-welded member 5 is the terminal post cover plate 2, the terminal post cover plate 2 is installed in the hollow groove of the terminal post body 3, and the third point position A3 may be located on the terminal post body 3. Therefore, after the end-to-end closed welding track is achieved, the welding is continued to the third point position A3, so that the entire welding track is more complete and the welded product has higher stability.

In some embodiments, after the rotating the rotating pressure arm 200 along the welding direction X from the first position to the second position, the welding method further comprises: rotating, if it is detected that the welding apparatus 30 completes a welding operation, the rotating pressure arm 200 from the second position to the first position. After the completion of the welding operation is detected, the rotating pressure arm 200 is rotated back to the original first position, thereby facilitating the restoration of the entire processing to the original position, and facilitating subsequent automated pressing and welding. The rotating the pressure arm 200 from the second position to the first position may comprise: rotating the rotating pressure arm 200 along the welding direction X from the second position to the first position, or rotating the rotating pressure arm 200 along an opposite direction of the welding direction X from the second position to the first position.

To sum up, the to-be-welded member 5 may be pressed through the rotating pressure arm 200 and the pressing plate 100, so that the to-be-welded member 5 tightly contacts with other components, which is convenient for welding the to-be-welded member 5 and improving the welding stability. Moreover, the position of the edge of the to-be-welded member 5 shielded by the rotating pressure arm 200 and/or the pressing plate 100 may also be changed through the rotating pressure arm 200 during the welding, which is convenient for welding along the edge of the to-be-welded member 5 while pressing the to-be-welded member 5, thereby improving the reliability of the welding and the convenience of the welding process.

Finally, it should be noted that: the above embodiments are merely used to illustrate the technical solutions of the present application, instead of imposing any limitation on the present application. Although the present application has been described in detail with reference to the above embodiments, those with ordinary skills in the art should understand that: the technical solutions disclosed in the above embodiments may still be modified, or a part or all of the technical features thereof may be replaced equivalently. These modifications and replacements are not intended to make the essence of corresponding technical solutions depart from the scope of the technical solutions of the embodiments of the present application, and should be encompassed within the scope of the claims and specification of the present application. In particular, the technical features mentioned in the various embodiments can be combined in any manner as long as there is no structural conflict. The present application is not limited to the particular embodiments disclosed herein, but rather includes all technical solutions falling within the scope of the claims.

## Claims

1. A pressing plate assembly, comprising:
a pressing plate configured to cover an end surface of a to-be-welded member; and
a rotating pressure arm connected to the pressing plate, wherein the rotating pressure arm is configured to press the to-be-welded member through the pressing plate, extends in a direction away from the pressing plate, and is capable of rotating relative to the to-be-welded member, to change a position of an edge of the to-be-welded member shielded by the rotating pressure arm and/or the pressing plate.

2. The pressing plate assembly according to claim 1, wherein the pressing plate is configured to cover a non-edge region of the end surface of the to-be-welded member.

3. The pressing plate assembly according to claim 2, wherein the rotating pressure arm is capable of rotating relative to the pressing plate to change the position of the edge of the to-be-welded member shielded by the rotating pressure arm.

4. The pressing plate assembly according to any one of claims 1 to 3, wherein the pressing plate has a first end surface and a second end surface arranged opposite to each other, the first end surface covers the end surface of the to-be-welded member, the pressing plate assembly further comprises a connecting post connected to the pressing plate, and the connecting post protrudes from the second end surface and is connected to the rotating pressure arm.

5. The pressing plate assembly according to claim 4, wherein the connecting post is fixedly connected to the pressing plate, one end of the rotating pressure arm is provided with a sleeve hole, the rotating pressure arm is sleeved on an outer periphery of the connecting post through the sleeve hole, and the rotating pressure arm is capable of rotating relative to the connecting post.

6. The pressing plate assembly according to claim 5, wherein the connecting post comprises a sleeve portion and a clamp-stopping portion that are coaxially arranged, the rotating pressure arm is sleeved on an outer periphery of the sleeve portion through the sleeve hole, the pressing plate assembly further comprises a locking member, the locking member is connected to the rotating pressure arm, and the locking member is configured to match the clamp-stopping portion to keep the connecting post and the rotating pressure arm relatively fixed.

7. The pressing plate assembly according to claim 6, wherein an outer wall surface of the clamp-stopping portion comprises at least one pair of first clamp-stopping surfaces arranged along a radial direction of the clamp-stopping portion, the locking member is provided with a clamp-stopping groove, an inner wall surface of the clamp-stopping groove comprises at least one pair of second clamp-stopping surfaces arranged along the radial direction of the clamp-stopping portion, the clamp-stopping portion is located in the clamp-stopping groove, and one of the first clamp-stopping surfaces abuts against a corresponding second clamp-stopping surface among the second clamp-stopping surfaces, to keep the connecting post and the rotating pressure arm relatively fixed.

8. The pressing plate assembly according to claim 7, wherein a groove mouth of the clamp-stopping groove faces the clamp-stopping portion, and the locking member enables the clamp-stopping portion to be located in the clamp-stopping groove through the groove mouth of the clamp-stopping groove; or the locking member enables the clamp-stopping portion to exit from the clamp-stopping groove through the groove mouth of the clamp-stopping groove.

9. The pressing plate assembly according to claim 6, wherein an outer wall surface of the clamp-stopping portion comprises a first abutting surface, one side surface of the locking member facing the clamp-stopping portion comprises a second abutting surface, and the locking member abuts against the second abutting surface through the first abutting surface, to keep the connecting post and the rotating pressure arm relatively fixed.

10. The pressing plate assembly according to any one of claims 6 to 9, wherein one of the rotating pressure arm and the locking member is provided with a sliding groove extending in a direction away from the connecting post, the other one of the rotating pressure arm and the locking member is provided with a sliding portion slidably fitted with the sliding groove, and the sliding portion is configured to slide in the sliding groove, to make the locking member be close to or away from the clamp-stopping portion.

11. The pressing plate assembly according to any one of claims 6 to 10, wherein the sleeve portion is closer to the pressing plate than the clamp-stopping portion.

12. The pressing plate assembly according to any one of claims 6 to 11, wherein the pressing plate assembly further comprises a top member fixed to one end of the clamp-stopping portion away from the pressing plate and having a larger radial size than the clamp-stopping portion.

13. The pressing plate assembly according to any one of claims 4 to 12, wherein the pressing plate assembly further comprises a bottom member, the connecting post is connected to the pressing plate through the bottom member, and the bottom member has a larger radial size than the connecting post.

14. The pressing plate assembly according to claim 5, wherein the pressing plate assembly further comprises a top member and an elastic member, the top member is fixed to one end of the connecting post away from the pressing plate, the top member has a larger radial size than the connecting post, the rotating pressure arm is located between the elastic member and the top member, and the elastic member is elastically supported between the rotating pressure arm and the pressing plate.

15. The pressing plate assembly according to claim 14, wherein the elastic member is sleeved on a peripheral side of the connecting post.

16. The pressing plate assembly according to claim 14 or 15, wherein one of the top member and the rotating pressure arm is provided with a fixing groove, the other one of the top member and the rotating pressure arm is provided with a fixing portion corresponding to the fixing groove, and the fixing portion is inserted into the fixing groove, to keep the connecting post and the rotating pressure arm relatively fixed.

17. The pressing plate assembly according to any one of claims 14 to 16, wherein the pressing plate assembly further comprises a bottom member having a larger radial size than the connecting post, the connecting post is connected to the pressing plate through the bottom member, and the elastic member is elastically supported between the rotating pressure arm and the bottom member.

18. A welding system, comprising a welding apparatus and the pressing plate assembly according to any one of claims 1 to 17, wherein the pressing plate assembly is configured to press a to-be-welded member, and the welding apparatus is configured to weld the to-be-welded member along an edge of the to-be-welded member.

19. A welding method, being applied to the welding system according to claim 18, the welding method comprising:
pressing, by the rotating pressure arm, an end surface of the to-be-welded member through the pressing plate;
welding, by the welding apparatus, the to-be-welded member along an edge of the to-be-welded member; and
rotating the rotating pressure arm relative to the to-be-welded member during the welding of the to-be-welded member by the welding apparatus, to change a position of the edge of the to-be-welded member shielded by the rotating pressure arm and/or the pressing plate.

20. The welding method according to claim 19, wherein the rotating the rotating pressure arm relative to the pressing plate comprises:
rotating the rotating pressure arm in a welding direction of the welding along the edge of the to-be-welded member by the welding apparatus.

21. The welding method according to claim 19, wherein the rotating the rotating pressure arm relative to the pressing plate comprises:
if it is detected that the welding apparatus welds from a first point position to a second point position; wherein the first point position is closer to the rotating pressure arm than the second point position in a welding direction of the welding along the edge of the to-be-welded member by the welding apparatus;
rotating the rotating pressure arm along the welding direction from a first position to a second position; wherein the first position comprises a position where the rotating pressure arm is not located between the first point position and the second point position in the welding direction, and the second position comprises a position where the rotating pressure arm shields an area between the first point position and the second point position in the welding direction.

22. The welding method according to claim 21, wherein after the rotating the rotating pressure arm along the welding direction from the first position to the second position, the welding method further comprises:
rotating, if it is detected that the welding apparatus completes a welding operation, the rotating pressure arm from the second position to the first position.

23. The welding method according to claim 19, wherein the welding, by the welding apparatus, the to-be-welded member along the edge of the to-be-welded member comprises:
welding, by the welding apparatus, along the edge of the to-be-welded member to form an end-to-end closed welding track; and
welding, by the welding apparatus, to a third point position along end-to-end closure to form a closing track; wherein the third point position is on or outside the welding track.
